# EUROPEAN PATENT APPLICATION

(11) **EP 3 952 267 A1**
(43) Date of publication of application: **09.02.2022**
(21) Application number: 20782473.1
(22) Date of filing: 07.02.2020
(51) Int. Cl.: H04N 5/222, H04N 5/232, H04N 9/74

(54) **SYSTEM AND METHOD FOR CAPTURING AND PROJECTING IMAGES, AND USE OF THE SYSTEM**

(30) Priority: 29.03.2019 BR 102019006465
(71) Applicant: Globo Comunicacao e Participacoes S.A., 22460-901 Rio de Janeiro RJ (BR)
(72) Inventor: MARQUES ARRABAL, Alexandre Thadeu da Costa, 22460-110 RIO DE JANEIRO RJ (BR); XAVIER FILHO, Rodolpho Barcelos, 24360-420 NITERÓI RJ (BR)
(74) Representative: reuteler & cie SA
(86) International application number: PCT/BR2020/000006
(87) International publication number: WO 2020/198823

(57) **Abstract**

The invention relates to a system and a method for capturing and projecting images for use in an integrated studio including a real location and panels which render these premises partially virtual, using images generated from outside to create an image that is part real and part virtual by showing the images.

## Description

### Field of the Invention

The invention relates to the field of television production, more specifically to systems and methods of capturing and projecting images, and using them in TV Studio, and extending the images through virtual projections.

### Description of the related art

Currently, the TV and cinema market uses the scene extension technique, where a portion of the studio is physically mounted and another part is created by graphism.

The two major ways of implementing the expansion of scenarios today is through chrome-keying or through the use of projection headers.

The range of Scenarios with Chroma-keying is one of the most currently used techniques. In this case, the scenario is composed of floors and walls of homogeneous color, generally green or blue, and may or may not contain additional furniture. The process of replacing the image on the wall is done by computer program. Thus, all of the camera viewing in hue will be exchanged for an image, video or virtual graphism.

US pat. no. 6,091,579 describes a position detection device of a virtual studio object, which comprises providing an object with an emitting device and using the device in conjunction with a standard chroma-key background or background to provide the exact position of A TV camera or alone to provide a position for another object or person.

WO 197028654 describes a video system that creates a virtual shadow of a filmed object in front of a blue screen with a main video camera. The virtual shadow is created using A second camera located as A source of virtual light, this system uses the chroma-key color system.

The extent of scenarios with projection televisions consists of a simpler and easy-to-application technique, although quite restrictive.

In this case, a panel or telco is placed as an image, video or virtual screen, through the presentor that is within the studio. This technique, however, limits the movements of the camera and, any wider movement may show the boundaries of the panel and impair the composition of the image. In this technique, the use is restricted to stops or with minimal movements.

The present invention provides a system that allows an integrated virtual image to a real image, performed in real-time.

### Drawings

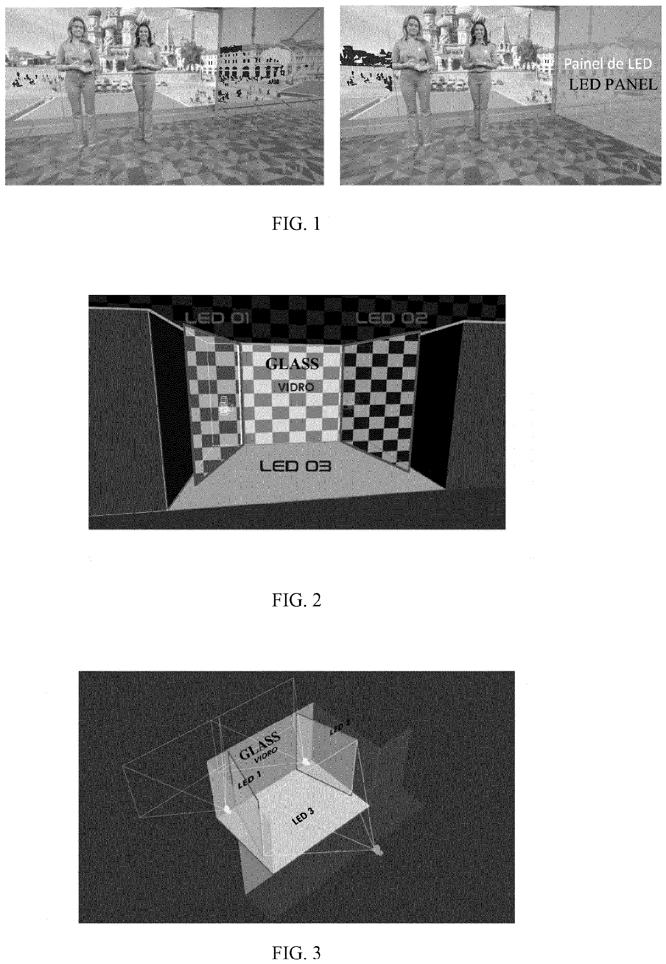

FIG. 1 shows the scenario extension using panels of LED.
FIG. 2 shows A perspective view of the carrot elements such as glass bottom and LED panels.
FIG. 3 shows a top view of the studio and the shape of the panels and carrot elements.

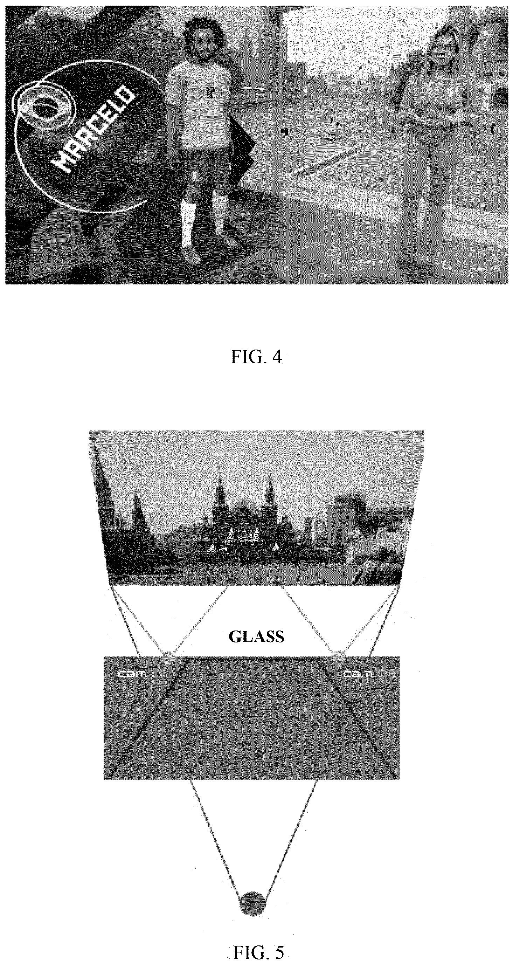

FIG. 4 shows infographs and animated virtual character inserted into the video by the graphism servers.
Figure 5 shows the physical layout of the studio, with the anchoring points of the panels.

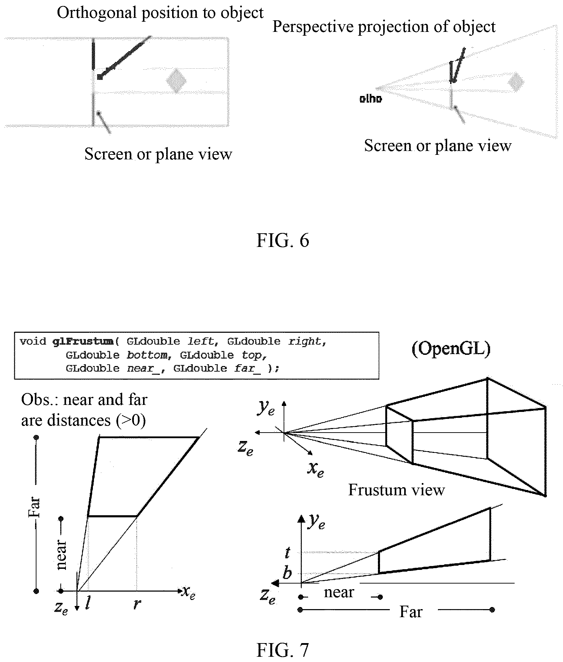

FIG. 6 shows an embodiment of the asymmetric frustrum projection technique.
FIG. 7 shows the distortions of an asymmetric frustrum.

### Detailed description of the invention

The present invention solves the aforementioned problems of studio size and moving the cameras offering A more complete and robust approach, delivering A final image where the television viewer is unable to perceive what is real or virtual and running all in real-time, ie allowable in live programs.

Thus, the presented solution enhances the perception of space in the studio through the range concept of scenarios, making use of LED Televisions, glass bottom with view to a real environment, cameras with motion tracking sensors and software responsible for controlling the images displayed in the telco.

### LED big displays

LED televisions are disposed laterally, perpendicular to the floor and rotated relative to the background window forming an angle of 120 degrees. This angle may vary, however, to be greater than 90 degrees.

The LED technology has been chosen for high resolution account by other existing technologies. This resolution is greater not only in the amount of pixels as in the intensity of the colors. There is an additional importance in the intensity of colors by accounting for the incidence of such lighting on the real environment. This effect will contribute to the perception of presentor insertion into the virtual environment.

### Glass background

The background is important to boost the effect of studio insertion in a real environment.

Near the glass bottom and hidden behind the LED side panels are two static cameras that capture images complementary to those viewed through the glass bottom. These complementary images are sent to servers that distort as the perspective of the studio camera and forwards them for display on the side panels.. When viewed through the camera of the studio, the images on the panels extend the view offered by the glass bottom. However, if viewed from any other point of view other than the camera, appear distorted and out of context.

### Cameras with motion sensors

Two cameras with motion sensors are positioned within the studio. They have the features of not only tracking movements, but also to promote changes in the lens (zoom and focus). This data is captured and sent to the graphics server that interprets them and thus deforms the images captured by the static cameras near the bottom of the glass to be displayed in the televisions according to the perspective of the cameras positioned within the studio.

Sensors and tracking systems are commonly known in the art. Software are used to generate and provide graphitization for projections on the LED loops. An embodiment of the invention allows for the composition of a fully virtual studio composed of LED Panels in the walls, roof and floor. The term "virtual Inserts" may be understood as any graphic computation inserted over the image such as: signs, characters, characters, characters, and graphics elements in general.

The physical studio is composed of an entire front wall of glass, and the remaining opaque walls, behave in a transparent manner. The effect sought would be to recreate a 180 Degree (panoramic) studio and, for this, the side walls should be glass, or invisible.

The physical studio can have any desired dimension, and the LED Panels are then positioned on each side, rotated approximately 30 degrees, the panel being the hypotenuse of the triangle formed therebetween, the glass and the wall, with the angle formed between the wall and the panel.

The slope of the panels avoids aberrations in the image by virtue of the light emitting angle of the LEDs, when viewed by the camera, otherwise might suffer entirely on the total reflection effect and appear dark, in addition to creating a hidden area for positioning between the panel and wall a static camera with a large angular (170 degree) lens bonded to the glass to pick up the outside in process (called stiching).

The floor made on LED plates allows for the change of graphics, for displaying images or completing the current floor itself.

Application of filters and films is performed to arrive at luminance levels in the glass compatible with equalizing the images generated in the LED and images received through the front wall glass.

Even as an integral part of the vehicle's internal assembly, a sensory stick has been used for the purpose of camera tracking.

The process for the end effect is composed by the following steps:
capturing the images to complement the scene through 1 or 2 or more cameras with a large (s) angular lens;
the images of these cameras undergo a process called titching, which is to create a single image overlying the common zones between the 2 cameras, having as a result a filmed panoramic image;
the panoramic image being sent to the graphical computing system, which projects it into a virtual plane that is spaced and scaled to overlie and cooperate with the actual image;
camera and lens tracking sensors are added so that, in real-time, the cameras used for transmission have their intrinsic and extrinsic data, being informed of the graphical computing system;
for each transmission camera, a graphical computing system is required receiving all of the information mentioned above;
each graphical computation system calculates the projected distortion of the panoramic image, which is projected onto the LED panels while always the view point of the current camera. In this manner the image of the LEDs merges with the actual image of the window;
all video signals need to be adjusted by the TV systems so that they have the calculated delay, so that the videos are displayed without delay and on the right order.

The graphical computing system is installed on servers that are located in the central art and receives the camera and lens tracking data by a connection, such as ethernet.

The studio can be composed of two Side-LED Panels, optionally an LED Panel on the floor and a glass window at the bottom.

The side panels are perpendicular to the floor and rotated relative to the bottom window forming an angle of 120 degrees (for the correct functioning, the angle should be greater than 90 degrees).

Behind each side panel is one or more static cameras with one or more large angular lenses with a viewing angle near 180 degrees, pointing out of the studio through the glass window. The video captured by each of these cameras is inserted into a processor and sent to the corresponding side panel. This processor, in addition to the video of the rear-panel camera, also receives the position and lens data from the main camera of the studio.

In an alternative embodiment, only one static camera can be used to capture the external image.

In an alternative embodiment, the static camera may have one or more large angular lenses.

The projectile warping Process is performed by the asymmetric frustrum projection technique, available and implemented in all programming and programming framework for real-time graphical computation already known in the art.

The background distortion for asymmetric is also implemented by available software on the market, being represented by the function described below.

Since the system receives camera position data with respect to the studio, ie, identifying the camera on the studio, a virtual camera is created with the same characteristics and changes of lens, camera and position occurring in real-time, these data are duplicated and simultaneously feed two virtual systems simultaneously. The first system (system 1) processes all related to the distortions for the LED headers. The Second system (system 2) applies increased reality elements.

The LED panel has a processing time for displaying the images, therefore, once the system 2, responsible for the virtual inserts, needs to be delayed so that the system 1 protrudes on the LED the image complementary to the glass before the system 2 Captures the studio image to make the virtual inserts. The delay, referred to as aliasing, is variable, lying in the 3-frame range in the worst case.

To enable the calculation of the projected distortion and other resources, the servers in the central technique, where the systems are installed, are fed with tracking data from the camera and the lens, such as via ethemet or any other compatible means, and with video, for example via video cables.The system is divided into modules: the projected distortion of the panoramic image is calculated by a part of the system that is a software available on the market; and the 3D elements inserted into the studio are generated by systems that will not be described here.

The virtual window perception is due to the fact that temporal coherence exists between the real image seen through the glass and the completion of the studio by the LED Panels. The effect as described generates a perception of a real scenario, much greater than the physical space available with imbedding interventions in fluid manner.

From the foregoing, it will be appreciated that numerous modifications and variations may be made without departing from the true spirit and scope of the novel concepts of the present invention. It should be understood that no limitation with respect to the specific embodiments illustrated is intended or should be inferred. The disclosure is intended to cover all such modifications as fall within the scope of the invention.

## Claims

1. An image acquisition and projection system, comprising LED panels, glass bottom with view to a real environment, cameras with motion tracking sensors, imaging caption static cameras and software operating together.

2. The image acquisition and projection system of claim 1, wherein the LED panels are disposed laterally with respect to the glass bottom, perpendicular to the floor and rotated relative to the bottom window.

3. The image pickup and projection system of claim 2, wherein the LED panels form an angle of greater than 90 degrees, preferably 120 degrees.

4. The image pickup and projection system of claim 1, wherein the LED panels are rotated about 30 degrees.

5. The image acquisition and projection system of claim 1, further comprising one or more static cameras behind the LED side panels.

6. The image acquisition and projection system of claim 5, wherein the static cameras send images complementary to servers that distort as the perspective of the camera with motion sensor and forward for display on the LED side Panels.

7. The image acquisition and projection system of claim 5, wherein the static cameras capture images that are deformed and displayed on the LED televisions according to the perspective of the cameras with motion sensor positioned within the studio.

8. The image acquisition and projection system of claim 5, wherein the static cameras preferably have large (s) angular (s) lenses that capture images that complement the internal scenario.

9. The image acquisition and projection system of claim 5, wherein the images of the external static cameras will suffer stitching, creating a single image overlying the common zones between the two cameras.

10. The image acquisition and projection system of claim 5, wherein the static cameras create a panoramic image that is sent to a graphical computing system that projects such an image into a far and scaled virtual plane to superimpose and interact with the real image.

11. The image acquisition and projection system of claim 1, further comprising two or more cameras with motion sensors positioned within a studio.

12. The image acquisition and projection system of claim 11, wherein the cameras with motion sensors are capable of tracking movements and promoting changes in the lens as the movement.

13. The image acquisition and projection system of claims 11, wherein the motion sensor cameras capture information that is sent to the graphism server and interpreted.

14. The image acquisition and projection system of claim 11, wherein a graphical computing system receives tracking data from the cameras with motion sensor and lens by connection.

15. The image acquisition and projection system of claim 11, wherein the motion sensor cameras further comprise camera and lens tracking sensors.

16. An image acquisition and projection system according to any one of the foregoing claims, wherein each graphical computing system calculates the projected distortion of the panoramic image.

17. The image acquisition and projection system according to any of the foregoing claims, wherein the video signals are set by TV systems having the calculated delay, wherein the videos are displayed without delay and in the correct order.

18. Use of the image acquisition and projection system, as defined in any of the foregoing claims, **characterized by** being on a physical studio.

19. The use of the image pickup and projection system of claim 18, wherein the studio comprises an entire front wall of glass and the other opaque walls.

20. The use of the image acquisition and projection system of claim 18, wherein the entire front glass wall includes applying filters and films that balance the images generated on the LED with the images received through the front wall glass.

21. An image capturing and projection method using the system as defined in claims 1 to 17, comprising the steps of:
capturing the images complementary to the real scene through one, two or more static cameras with large angular lenses;
sending the panoramic image to the graphical computing system and projecting it into a far and scaled virtual plane to overlie and cooperate with the real image;
addition of camera and lens tracking sensors, the cameras used for real-time transmission having intrinsic and extrinsic data input to the graphical computing system;
calculating the projected distortion of the panoramic image by the graphical computing system;
setting the video signals by the TV systems, which calculate the delay;
display of the video without delay and in the correct order.
